(19) Europäisches Patentamt
European Patent Office
Office européen des brevets

(11) **EP 4 038 215 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **20781363.5**

(22) Anmeldetag: **28.09.2020**

(51) Internationale Patentklassifikation (IPC):
**C23C 2/00** (2006.01) **C23C 2/04** (2006.01)
**C23C 2/12** (2006.01) **B21D 35/00** (2006.01)
**B21D 22/02** (2006.01) **B21D 53/88** (2006.01)
**C23C 28/00** (2006.01)

(52) Gemeinsame Patentklassifikation (CPC):
**C23C 28/00; B21D 22/022; B21D 35/007; B21D 53/88; C23C 2/00; C23C 2/04; C23C 2/12; C23C 28/30**

(86) Internationale Anmeldenummer:
**PCT/EP2020/077133**

(87) Internationale Veröffentlichungsnummer:
**WO 2021/063899 (08.04.2021 Gazette 2021/14)**

(54) **VERFAHREN ZUR HERSTELLUNG EINES PRESSGEHÄRTETEN STAHLBLECHBAUTEILS MIT EINEM ALUMINIUMBASIERTEN ÜBERZUG SOWIE EINE AUSGANGSPLATINE UND EIN PRESSGEHÄRTETES STAHLBLECHBAUTEIL HIERAUS**

METHOD FOR PRODUCING A PRESS-HARDENED SHEET STEEL PART HAVING AN ALUMINIUM-BASED COATING, INITIAL SHEET METAL BLANK, AND A PRESS-HARDENED SHEET STEEL PART MADE THEREFROM

PROCÉDÉ DE FABRICATION D'UNE PIÈCE EN TÔLE D'ACIER TREMPÉE À LA PRESSE PRÉSENTANT UN REVÊTEMENT À BASE D'ALUMINIUM, ÉBAUCHE DE TÔLE INITIALE ET PIÈCE EN TÔLE D'ACIER TREMPÉE À LA PRESSE FABRIQUÉE À PARTIR DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2019 DE 102019126378**

(43) Veröffentlichungstag der Anmeldung:
**10.08.2022 Patentblatt 2022/32**

(73) Patentinhaber: **Salzgitter Flachstahl GmbH 38239 Salzgitter (DE)**

(72) Erfinder:
• **LUTHER, Friedrich 47259 Duisburg (DE)**
• **DEBEAUX, Marc 47259 Duisburg (DE)**
• **BEIER, Frank 47259 Duisburg (DE)**
• **KÖRNER, Kerstin 47259 Duisburg (DE)**

(74) Vertreter: **Moser Götze & Partner Patentanwälte mbB Paul-Klinger-Strasse 9 45127 Essen (DE)**

(56) Entgegenhaltungen:
**WO-A1-2019/171157**

**Beschreibung**

Die Erfindung betrifft ein Verfahren zur Herstellung eines pressgehärteten Stahlblechbauteils mit sehr guter Lackierbarkeit und Schweißbarkeit in allen Bereichen dieses Bauteils, das aus einer Ausgangsplatine mit unterschiedlichen Blechdicken hergestellt wurde und bei dem die Ausgangsplatine einen Schmelztauchüberzug auf Basis von Aluminium aufweist. Des Weiteren betrifft die Erfindung eine Ausgangsplatine mit unterschiedlichen Blechdicken und einem aluminiumbasierten Überzug sowie ein pressgehärtetes Bauteil aus einer solchen Ausgangsplatine. Als unterschiedliche Blechdicken für die Ausgangsplatine wird im Folgenden eine Blechdickendifferenz verstanden, bei der die Blechdicke eines dünnen Teils der Ausgangsplatine nur 80 % der Blechdicke des Platinenteils mit einer größten Blechdicke aufweist oder weniger.

Als aluminiumbasierte Überzüge werden nachfolgend metallische Überzüge verstanden, bei denen Aluminium der Hauptbestandteil in Massenprozent ist. Beispiele für mögliche aluminiumbasierte Überzüge sind Aluminium, Aluminium-Silizium (AS), Aluminium-Zink-Silizium (AZ), sowie dieselben Überzüge mit Beimischungen zusätzlicher Elemente, wie z. B. Magnesium, Mangan, Titan und seltenen Erden. Übliche Schichtauflagen liegen für diesen Überzug bei etwa 60 g/m$^2$ bis etwa 200 g/m$^2$ beidseitig.

Es ist bekannt, dass warmumgeformte Stahlbleche insbesondere im Automobilbau immer häufiger Verwendung finden. Durch den auch als Presshärten bezeichneten Prozess können hochfeste Bauteile erzeugt werden, die vorwiegend im Bereich der Karosserie eingesetzt werden. Das Presshärten kann grundsätzlich mittels zwei verschiedener Verfahrensvarianten durchgeführt werden, nämlich mittels des direkten oder indirekten Verfahrens. Während bei indirekten Verfahren die Prozessschritte des Umformens und Härtens getrennt voneinander ablaufen, finden sie beim direkten Verfahren in einem Werkzeug gemeinsam statt. Im Folgenden wird aber nur das direkte Verfahren betrachtet.

Beim direkten Verfahren wird eine Stahlblechplatine über die sogenannte Austenitisierungstemperatur (Ac3) aufgeheizt, anschließend wird die so erhitzte Platine in ein Formwerkzeug überführt und in einem einstufigen Umformschritt zum fertigen Bauteil umgeformt und hierbei durch das gekühlte Formwerkzeug gleichzeitig mit einer Geschwindigkeit, die über der kritischen Abkühlgeschwindigkeit des Stahls liegt, abgekühlt, so dass ein gehärtetes Bauteil erzeugt wird.

Bekannte warmumformbare Stähle für diesen Einsatzbereich sind zum Beispiel der Mangan-Bor-Stahl "22MnB5" und neuerdings auch luftvergütbare Stähle gemäß dem europäischen Patent EP 2 449 138 B1.

Neben unbeschichteten Stahlblechen werden auch Stahlbleche mit einem Verzunderungsschutz für das Presshärten von der Automobilindustrie eingesetzt. Die Vorteile liegen hier neben der erhöhten Korrosionsbeständigkeit des fertigen Bauteils darin, dass die Platinen oder Bauteile im Ofen nicht verzundern, wodurch der Verschleiß der Pressenwerkzeuge durch abgeplatzten Zunder reduziert wird und die Bauteile vor der Weiterverarbeitung nicht aufwendig gestrahlt werden müssen.

Die Herstellung von Bauteilen mittels Abschrecken von mit einer Aluminiumlegierung beschichteten Vorprodukten aus presshärtbaren Stählen durch Warmumformen in einem Umformwerkzeug ist aus dem deutschen Patent DE 699 33 751 T2 bekannt. Hier wird ein mit einer Aluminiumlegierung beschichtetes Blech vor einem Umformen auf über 700 °C erwärmt, wobei eine intermetallisch legierte Verbindung auf Basis von Eisen, Aluminium und Silizium auf der Oberfläche entsteht und nachfolgend das Blech umgeformt und mit einer Geschwindigkeit oberhalb der kritischen Abkühlgeschwindigkeit abkühlt.

Aus der Offenlegungsschrift DE 10 2015 122 410 A1 sind beispielsweise bei der Herstellung von crash-relevanten Karosseriebauteilen Verfahren bekannt, bei denen Ausgangsplatinen mit einem aluminiumbasierten Überzug zum Einsatz kommen, die individuell auf die Bauteilanforderungen abgestimmt sind. Beispielsweise kommen Umformplatinen zum Einsatz, die unterschiedliche Materialdicken und/oder Qualitäten aufweisen. Sogenannte flexibel gewalzte Bleche haben auf die Anforderung abgestimmt unterschiedliche Materialdicken bei gleicher Materialqualität. Bei geschweißten Platinen (TWB = Tailored Welded Blanks) ist neben der Materialdicke auch die Materialqualität veränderbar. Bauteile, für die solche Verfahren in Frage kommen, findet man beispielsweise für die Automobilindustrie in der gesamten Rohbaukarosserie von Fahrzeugen, wie zum Beispiel bei A-Säulen, B-Säulen, Längsträgern, Querträgern, Stoßfängern, Seitenaufprallträgern, Radhäusern und dergleichen.

Als problematisch hat sich bei der Verwendung von aluminiumbasierten Überzügen z. B. aus Aluminium-Silizium (AS) die mangelhafte Lackiereignung des umgeformten Bauteils bei der automobiltypischen kathodischen Tauchlackierung (KTL) herausgestellt, wenn eine zu kurze Erwärmungszeit beim Presshärten verwendet wurde. Bei kurzen Erwärmungszeiten weist das KT-lackierte Substrat dann eine unzureichende Lackhaftung auf.

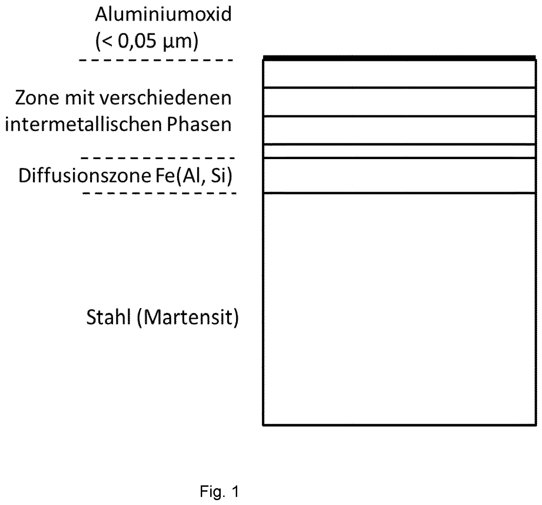

Der aluminiumbasierte Überzug muss daher bei der Erwärmung vor dem Presshärten ausreichend mit Eisen aus dem Stahlsubstrat durchlegieren, um eine gute Lackhaftung z. B. in einem kathodischen Tauchlackierungsprozess zu gewährleisten. Dabei wird im Zuge der Erwärmung auf dem Stahlsubstrat eine Diffusionszone aus Fe(Al,Si) ausgebildet, an die sich eine Zone mit verschiedenen intermetallischen Phasen anschließt. Durch die Oxidation im Ofen sowie beim Transfer in die Presse bildet sich zudem nur eine sehr dünne Aluminiumoxidschicht auf der Oberfläche aus. Ein entsprechender Schichtaufbau ist in Figur 1 dargestellt.

Allerdings darf der aluminiumbasierte Überzug auch nicht zu stark durchlegiert werden, da ansonsten Probleme beim Fügen, insbesondere beim Punktschweißen auftreten können. Als Grenze für die Punktschweißeignung wird oftmals die Dicke der sogenannten Diffusionsschicht zwischen Stahl und Überzug herangezogen. In der VW Konzernnorm TL 4225 liegt diese Grenze beispielsweise bei maximal 16 μm.

Bei Ausgangsplatinen mit unterschiedlichen Blechdicken muss daher einerseits für eine gute Lackhaftung eine ausreichende Durchlegierung des Al-basierten Überzugs auch im Bereich der größeren Blechdicke erreicht werden, andererseits darf im dünneren Bereich der Platine die Durchlegierung auch nicht zu stark sein, um die Schweißbarkeit nicht negativ zu beeinflussen. Übliche Blechdicken für ein als Ausgangsmaterial verwendetes Stahlband liegen zwischen 0,50 bis 3,00 mm, bevorzugt zwischen 0,75 und 2,50 mm.

Es hat sich allerdings gezeigt, dass sich Ausgangsplatinen mit unterschiedlichen Blechdicken bei der Erwärmung vor dem Presshärten unterschiedlich aufheizen. Dabei heizt der Bereich der Ausgangsplatine mit geringer Blechdicke deutlich schneller auf als der Bereich großer Blechdicke. Am metallografischen Schliff erkennt man deswegen oftmals im Bereich des Bauteils mit größerer Blechdicke nur eine sehr dünne Diffusionsschicht, im Bereich des Bauteils mit der geringen Blechdicke hingegen eine Diffusionsschichtdicke, die nahe an der zulässigen Obergrenze von 16 μm liegt. Hierdurch können pressgehärtete Bauteile mit inhomogenen Eigenschaften entstehen.

Ausgangsplatinen mit unterschiedlichen Blechdicken, die einen aluminiumbasierten Überzug aufweisen, verfügen daher nur über ein eingeschränktes Prozessfenster für die Erwärmung z. B. in einem Rollenherdofen beim Presshärten. Dabei bestimmt der dickere Platinenteil die Mindest-Erwärmdauer im Ofen zur Gewährleistung einer ausreichenden Lackhaftung und der dünne Platinenteil begrenzt die maximale Verweildauer im Ofen zur Gewährleistung einer guten Schweißeignung. Insbesondere bei großen Dickenunterschieden, zum Beispiel bei Platinen mit Blechdicken von 2,0 mm im dicksten Bereich und 1,0 mm im dünnsten Bereich, kann damit das resultierende Prozessfenster geringer sein.

Aus der internationalen Anmeldung WO 2021/063899 A1 ist weiter ein Verfahren zur Herstellung eines pressformgehärteten Bauteils bekannt, bei dem vorlegierten Stahlbänder, -bleche oder -zuschnitte verwendet werden.

Aufgabe der Erfindung ist es deshalb, ein Verfahren zur Herstellung eines pressgehärteten Stahlblechbauteils aus einer Ausgangsplatine mit unterschiedlichen Blechdicken und einem aluminiumbasierten Überzug anzugeben, mit dem ein im Vergleich zu Ausgangsplatinen mit konstanter Blechdicke vergleichbar großes Prozessfenster bei der Erwärmung erreicht wird und bei dem am pressgehärteten Bauteil homogene Eigenschaften hinsichtlich Lackierbarkeit und Schweißbarkeit vorliegen. Auch ist die Aufgabe der Erfindung eine Ausgangsplatine und ein daraus hergestelltes pressformgehärtetes Bauteil anzugeben.

Die Lehre der Erfindung umfasst ein Verfahren zur Herstellung eines pressgehärteten Bauteils aus einer Ausgangsplatine mit verschiedenen Blechdicken, wobei die Ausgangsplatine einen aluminiumbasierten Überzug aufweist mit folgenden Schritten:

- Bereitstellen eines Stahlbandes mit einem aluminiumbasierten Überzug
- Aufbringen einer anorganischen eisenhaltigen Konversionsschicht auf dem aluminiumbasierten Überzug mit einem Schichtgewicht bezogen auf Eisen von 3-30 mg/m$^2$
- Kaltwalzen des Stahlbandes zu einem flexibel gewalzten Band mit Bandabschnitten unterschiedlicher Blechdicke
- Zuschneiden einer Ausgangsplatine aus dem flexibel gewalzten Band, wobei die Ausgangsplatine unterschiedliche Blechdicken mit einem dünnsten und einem dicksten Blechabschnitt aufweist
- Pressformhärten der Ausgangsplatine zu einem Bauteil.

Ebenfalls umfasst die Lehre ein Verfahren zur Herstellung eines pressformgehärteten Bauteils aus einer Ausgangsplatine mit unterschiedlichen Blechdicken, wobei die Ausgangsplatine einen aluminiumbasierten Überzug aufweist, mit folgenden Schritten:

- Bereitstellen eines Stahlbandes mit einem aluminiumbasierten Überzug
- Kaltwalzen des Stahlbandes zu einem flexibel gewalzten Band mit Bandabschnitten unterschiedlicher Blechdicke,
- Zuschneiden einer Ausgangsplatine aus dem flexibel gewalzten Band, wobei die Ausgangsplatine unterschiedliche Blechdicken mit einem dünnsten und einem dicksten Blechabschnitt aufweist
- Vor oder nach dem Zuschneiden der Ausgangsplatine lokales oder vollflächiges Aufbringen einer anorganischen eisenhaltigen Konversionsschicht auf den aluminiumbasierten Überzug mit einem Schichtgewicht bezogen auf Eisen von 3-30 mg/m$^2$ zumindest im Bereich des dicksten Blechabschnitts
- Pressformhärten der Ausgangsplatine zu einem Bauteil

Eine weitere alternative Lehre der Erfindung umfasst ein Verfahren zur Herstellung eines pressformgehärteten Bauteils aus einer Ausgangsplatine mit unterschiedlichen Blechdicken, wobei die Ausgangsplatine einen aluminiumbasierten Überzug aufweist, mit folgenden Schritten:

- Bereitstellen von mindestens zwei Stahlbandabschnitten mit einem aluminiumbasierten Überzug, die unterschiedliche Blechdicken aufweisen,
- Zusammenschweißen der Stahlbandabschnitte zu einer Ausgangsplatine, wobei die Ausgangsplatine unterschiedliche Blechdicken mit einem dünnsten und einem dicksten Blechabschnitt aufweist,
- Vor oder nach dem Zusammenschweißen lokales oder vollflächiges Aufbringen einer anorganischen eisenhaltigen Konversionsschicht auf den aluminiumbasierten Überzug mit einem Schichtgewicht bezogen auf Eisen von 3-30 mg/m² zumindest im Bereich des dicksten Blechabschnitts
- Pressformhärten der Ausgangsplatine zu einem Bauteil

Bei diesen erfindungsgemäßen Verfahren wird sehr vorteilhaft ein im Vergleich zu einer einheitlichen Dicke der Ausgangsplatine vergleichbar großes Prozessfenster bei der Erwärmung im Zuge der Pressformhärtung erreicht und es werden am pressgehärteten Bauteil ebenfalls vergleichbar homogene Eigenschaften hinsichtlich Lackierbarkeit und Schweißbarkeit erreicht.

Es ist grundsätzlich auch möglich, statt mit einem bereits mit einem aluminiumbasierten Überzug versehenen Stahlband in die erfindungsgemäßen Verfahren zu starten, die aluminiumbasierte Beschichtung nach einem flexiblen Walzen aufzubringen.

Aus wirtschaftlichen Gründen und im Sinne einer ausreichenden Gewichtsersparnis des pressgehärteten Bauteils sollte die Blechdicke des dünnsten Blechabschnitts der Ausgangsplatine höchstens 80 %, vorzugsweise 70 % oder weniger, der Dicke des dicksten Blechabschnitts der Ausgangsplatine aufweisen.

Der Kern der Erfindung besteht also aus der Applikation einer anorganischen eisenhaltigen Konversionsschicht, die als Vorbeschichtung auf den aluminiumbasierten Überzug der Ausgangsplatine oder der dafür verwendeten Stahlbänder aufgebracht wurde und die Aufheizrate bei der Erwärmung der Ausgangsplatine erhöht.

Um ein möglichst großes Prozessfenster bei der Erwärmung zu erreichen, sollte die Aufheizrate im dicksten Blechabschnitt der Ausgangsplatine deutlich stärker erhöht werden, als im dünnsten Blechabschnitt. Dies kann durch verschiedene Verfahrensvarianten gewährleistet werden, die im Folgenden kurz erläutert werden.

Prinzipiell führt aber auch schon eine prozentual gleiche Erhöhung der Aufheizraten im dicksten und dünnsten Platinenteil zu einer Angleichung der resultierenden notwendigen Erwärmzeiten. Erhöht sich beispielsweise die mittlere Aufheizrate in beiden Bereichen um 50 % (im dünnsten Bereich von 4 auf 6 K/s und im dicksten Bereich von 2 auf 3 K/s), so reduziert sich die Differenz der Erwärmzeiten von beispielsweise 20 °C bis 800 °C zwischen dem dicksten und dünnsten Platinenteil von 195 Sekunden auf 130 Sekunden). Somit erfährt eine Platine mit verschiedenen Blechdicken schon hierdurch eine Angleichung der Aufheizraten, wenn die Vorbeschichtung vollflächig mit einem konstanten Auflagengewicht aufgebracht wird.

Erfindungsgemäß umfasst die Lehre der Erfindung daher auch eine Ausgangsplatine zur Herstellung eines pressformgehärteten Stahlbauteils mit einem aluminiumbasierten Überzug, bei dem die Ausgangsplatine unterschiedliche Blechdicken aufweist, welche dadurch gekennzeichnet ist, dass eine anorganische eisenhaltige Konversionsschicht auf dem aluminiumbasierten Überzug mit einem Schichtgewicht bezogen auf Eisen von 3-30 mg/m², vorteilhaft 5-25 mg/m², besonders vorteilhaft 7-20 mg/m² ausgebildet ist.

Erfindungsgemäß kann diese Ausgangsplatine hergestellt sein aus einem flexibel gewalzten Stahlband oder auch aus zusammengeschweißten Blechabschnitten (TWB, Tailor Welded Blanks). Bei zusammengeschweißten Blechabschnitten ist vorteilhaft vorgesehen, dass diese bedarfsweise unterschiedliche Festigkeiten aufweisen, um unterschiedlichen Beanspruchungen im Betriebszustand Rechnung zu tragen. Die Unterschiede in der Festigkeit der Werkstoffe sollten aus wirtschaftlichen Gründen mehr 50 MPa betragen. Als geeignete Stahlsorten für die Ausgangsplatine kommen alle härtbaren Stahlsorten, insbesondere Mangan-Bor-Stähle in Betracht, wie z. B. der 22MnB5.

Bei Platinen, die aus zwei oder mehr Ausgangsplatinen mit verschiedenen Blechdicken zusammengefügt wurden (TWB), kann auch nur der Blechabschnitt mit der größten Blechdicke beziehungsweise mit den größten Blechdicken mit der anorganischen eisenhaltigen Konversionsschicht als Vorbeschichtung partiell oder ganzflächig versehen werden, um die Aufheizraten in den verschiedenen Platinenteilen zueinander anzunähern.

In einer vorteilhaften Ausgestaltung der Erfindung ist es auch denkbar, bei Platinen mit mehr als zwei Blechdicken, die anorganische eisenhaltige Konversionsschicht durch Anpassung der Eisenauflage abgestimmt auf die jeweilige Blechdicke so zu applizieren, dass die resultierende Platine homogen aufheizt. Bei gefügten Platinen aus mehreren Blechdicken kann bereits beim Stahlhersteller die anorganische eisenhaltige Konversionsschicht als Vorbeschichtung auf den aluminiumbasierten Überzug des Stahlbandes aufgebracht werden. Letztendlich stellt aber auch die Vorbeschichtung mit der anorganischen eisenhaltigen Konversionsschicht von einzelnen Platinen oder Platinenbereichen eine erfindungsgemäße Umsetzung dar.

Bei Platinen, die einen Blechdickenunterschied infolge eines Kaltwalzschritts aufweisen, kann die Applikation der anorganischen eisenhaltigen Konversionsschicht als Vorbeschichtung vollflächig vor oder nach dem Kaltwalzschritt erfolgen oder aber nur partiell im Bereich mit der größten Blechdicke nach dem Walzvorgang. Die partielle Applikation nach dem Walzschritt nur im dickeren Platinenbereich zeigt die beste Wirksamkeit, wodurch die Aufheizraten vollständig angeglichen werden können. Bei der Applikation vor dem Walzschritt erfolgt ebenfalls eine starke Angleichung der Aufheizraten, da durch den flexiblen Walzschritt die Vorbeschichtung in ihrer Wirksamkeit im dünner gewalzten Platinenteil stark abgeschwächt wird.

Die erfindungsgemäße Vorbeschichtung besteht aus dem Aufbringen von Eisenverbindungen, vorzugsweise in einem nasschemischen Prozess. Dieser besteht mindestens aus dem Aufbringen einer Lösung von Eisenverbindungen, die vorteilhaft in außenstromloser Reaktion mit dem Al-basierten metallischen Überzug reagieren.

Vorzugsweise wird diese Behandlung in Gegenwart von Verbindungen anderer Metalle beispielsweise aus der Gruppe Cobalt, Molybdän und Wolfram durchgeführt. Zum Beispiel beschleunigen Molybdate, Wolframate oder Cobaltnitrat die Abscheidung des Eisens merklich, werden aber nur in geringem Umfang selbst abgeschieden, wodurch das erfindungsgemäße Verfahren noch effizienter wird.

Die Entfernung der nativ entstandenen Oxidschicht auf dem Schmelztauchüberzug auf Basis von Aluminium und die Abscheidung der Eisenverbindungen kann bei Verwendung alkalischer Medien vorteilhaft simultan in einem einzigen nasschemischen Schritt durchgeführt werden. Derartige Abscheideprozesse können in kontinuierlich arbeitenden Anlagen bei Bandgeschwindigkeiten von bis zu 120 m/min oder mehr durchgeführt werden. Der erforderliche Wirkstoffaufwand kann dabei weniger als 100 mg/m$^2$ betragen.

Bei den Untersuchungen wurde festgestellt, dass sich ab einem Schichtgewicht von 3 mg/m$^2$ bezogen auf Eisen, vorteilhaft 5 mg/m$^2$ bezogen auf Eisen, besonders vorteilhaft 7 mg/m$^2$ bezogen auf Eisen, die Aufheizraten im Vergleich zu einer unbehandelten Referenz deutlich steigern lassen. Das maximale Schichtgewicht sollte 30 mg/m$^2$ bezogen auf Eisen nicht überschreiten. Darüber hinaus ist die Steigerung der Aufheizrate nur klein und das Punktschweißverhalten nach dem Presshärten beginnt sich zu verschlechtern, weshalb aus wirtschaftlichen und technologischen Gründen höhere Schichtgewichte nicht sinnvoll sind. Vorteilhaft werden bis zu 25 mg/m$^2$ bezogen auf Eisen, besonders vorteilhaft bis zu 20 mg/m$^2$ bezogen auf Eisen appliziert, um den Wirkstoffaufwand möglichst gering zu halten.

Die Schichtgewichte wurden mit der ICP-OES (optische Emissionsspektroskopie mit induktiv gekoppeltem Plasma) bestimmt. Hierzu wurde die auf der Oberfläche ausgebildete Konversionsschicht chemisch abgelöst, anschließend analysiert und gegen kommerziell erhältliche Elementstandards referenziert.

Die erfindungsgemäße Behandlung der Oberfläche des beschichteten Stahlbandes kann vorteilhaft in dem Prozessteil einer kontinuierlich produzierenden Schmelztauchbeschichtungsanlage nachgeschalteten Behandlungsteil oder einer separaten Anlage, zum Beispiel über Spritzbalken mit Düsen oder in einem Tauchprozess erfolgen. Bei der separaten Anlage kann es sich z. B. um eine Bandbeschichtungsanlage handeln. Eine der erfindungsgemäßen Behandlung vorgeschaltete alkalische Reinigung mit nachfolgender Spülung beseitigt dabei vorteilhaft die durch atmosphärische Oxidation entstandene (native) Oxidschicht auf dem aluminiumbasierten Überzug und schafft dadurch einen definierten Ausgangszustand für die erfindungsgemäße Abscheidung des Eisens und/oder seiner Verbindungen.

Durch die Konzentration der Einsatzlösung und deren Temperatur, die Behandlungszeit, den Spritzdruck, die Scherung der aufgespritzten Lösung relativ zur Oberfläche des zu behandelnden Metallbandes sowie das mit der Oberfläche in Kontakt gebrachte Volumen kann die Menge des auf der Oberfläche abgeschiedenen Eisens beeinflusst werden.

Die Lehre der Erfindung umfasst weiter ein pressgehärtetes Bauteil hergestellt aus einer Ausgangsplatine mit einem aluminiumbasierten Überzug, mit unterschiedlichen Blechdicken mit einem dünnsten und einem dicksten Blechabschnitt, welches dadurch gekennzeichnet ist, dass eine Diffusionszone zwischen dem Stahlsubstrat und dem aluminiumbasierten Überzug, bestehend aus Metallen des Überzugs und des Stahlsubstrats, ausgebildet ist, wobei die Diffusionszonen in den verschiedenen Blechdickenbereichen, bezogen auf die Ausgangsplatine, einen maximalen Dickenunterschied aufweisen, der dem folgenden Zusammenhang entspricht:

$$DI_{max} \leq 8 \ast ((D1\text{-}D2)/D1),$$

mit

   D1: dickster Blechabschnitt der Ausgangsplatine
   D2: dünnster Blechabschnitt der Ausgangsplatine
   $DI_{max}$: Maximaler Dickenunterschied der Diffusionsschichtdicken am gehärteten Bauteil

In einer vorteilhaften Ausgestaltung der Erfindung entspricht der maximale Dickenunterschied $DI_{max}$ dem folgenden Zusammenhang:

$$DI_{max} \leq 6 \ast ((D1\text{-}D2)/D1)$$

In einer besonders vorteilhaften Ausgestaltung der Erfindung entspricht der maximale Dickenunterschied $DI_{max}$

dem folgenden Zusammenhang:

$$DI_{max} \leq 4*((D1-D2)/D1)$$

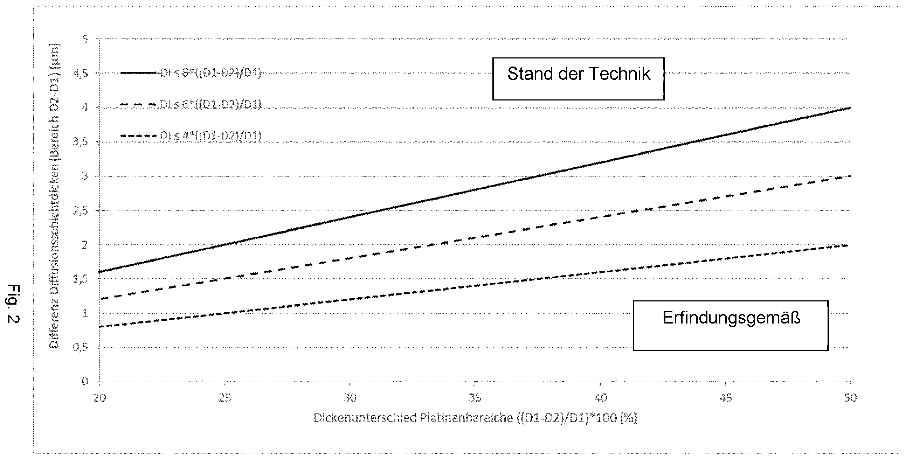

In Figur 2 sind diese Zusammenhänge grafisch dargestellt. Die drei Geraden stehen für die vorgenannten Zusammenhänge $DI_{max} \leq 8*((D1-D2)/D1)$, $DI_{max} \leq 6*((D1-D2)/D1)$ und $DI_{max} \leq 4*((D1-D2)/D1)$. Der Bereich über der durchgezogenen Geraden, welche für $DI_{max} \leq 8*((D1-D2)/D1)$ steht, gibt den Bereich an, der bisher vom Stand der Technik erzielbar war. Der Bereich unterhalb der durchgezogenen Geraden bildet den erfindungsgemäßen Bereich.

Erfindungsgemäß sollte die Dicke der Diffusionszone zwischen Stahl und dem aluminiumbasierten Überzug in den verschiedenen Blechdickenbereichen vorteilhaft zwischen 2 und 14 $\mu$m, besonders vorteilhaft zwischen 4 und 12 $\mu$m betragen, um einen ausreichend hohen, aber nicht übermäßigen Legierungsgrad zu gewährleisten.

Zur Erläuterung dieser Zusammenhänge werden im Folgenden Ergebnisse aus Laborversuchen beschrieben.

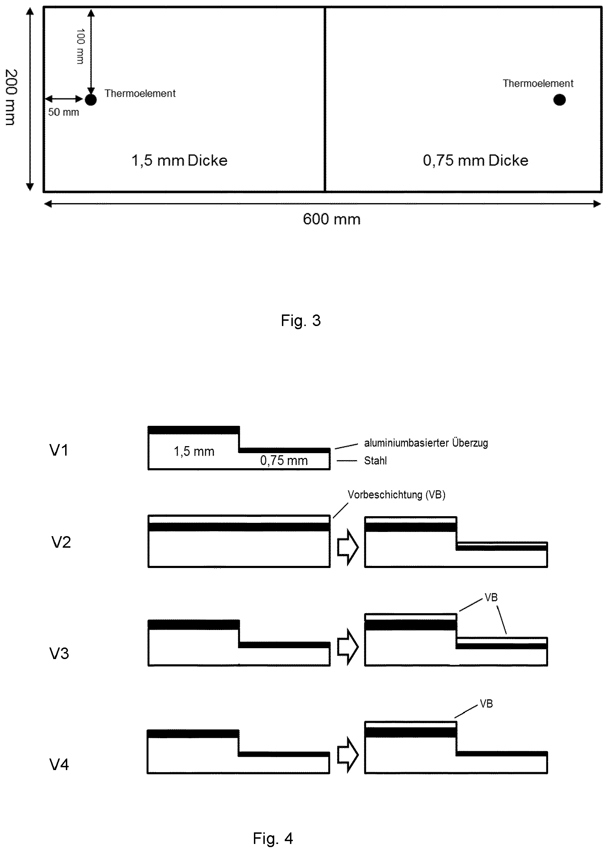

Blechstreifen aus dem härtbaren Stahl 22MnB5 mit einer Blechdicke von 1,5 mm und einem Aluminium-Silizium-Überzug mit einem Nenn-Auflagengewicht von 150 g/m$^2$ beidseitig wurden in einem Labor-Kaltwalzgerüst hälftig um 50 % abgewalzt und auf eine Probengröße von 200x600 mm$^2$ zugeschnitten, wobei der Dickenübergang in der Mitte lag (Figur 3).

An den Rändern der Proben wurden Thermoelemente aufgebracht und die Aufheizgeschwindigkeit in beiden Probenbereichen in einem auf 920 °C vorgeheizten Ofen aufgezeichnet. Im Anschluss wurde metallografisch die Dicke der Diffusionsschicht in mehreren Bereichen der Probe bestimmt.

Diese Verfahrensweise wurde ebenfalls mit Proben durchgeführt, die vor oder nach dem Kaltwalzschritt mit einer eisenhaltigen Beschichtung behandelt wurden. Die geprüften Varianten V1 bis V4 sind wie folgt: V1 - Walzen (Referenz); V2 - Vorbeschichtung, anschließendes Walzen; V3 - Walzen, anschließendes Vorbeschichten; V4 - Walzen, anschließendes partielles Vorbeschichten. In Figur 4 sind diese verschiedenen Varianten V1 bis V4 schematisch zusammengefasst (nicht maßstabsgetreu).

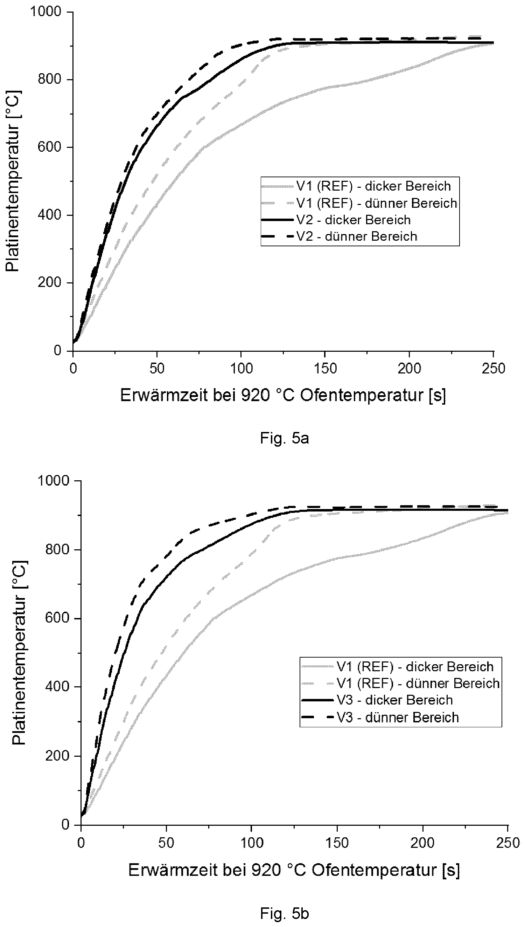

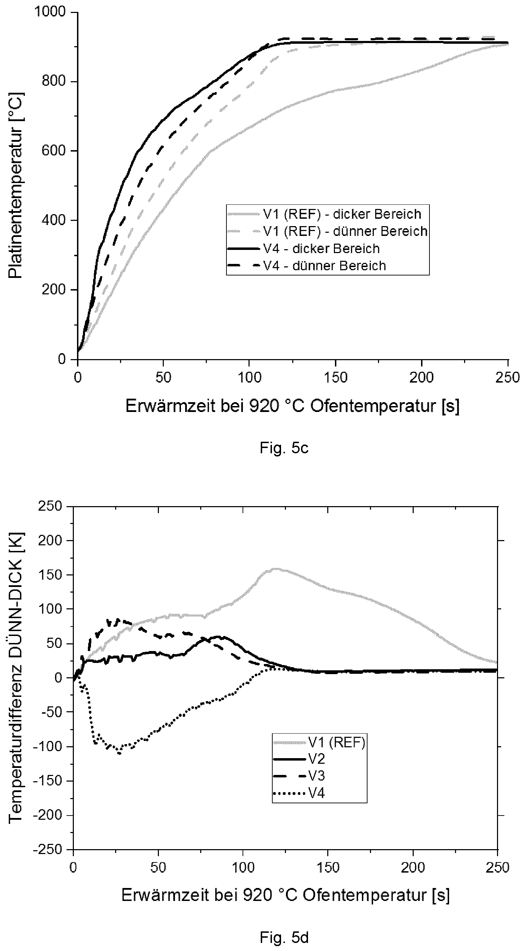

In den Figuren 5a bis 5d sind die resultierenden Aufheizkurven der Varianten V2 bis V4 jeweils im Vergleich zu den Referenzmessungen an Variante V1 dargestellt. Darüber hinaus ist auch die Temperaturdifferenz zwischen dem dicken und dünnen Probenteil in Abhängigkeit von der Erwärmzeit abgebildet. Es ist deutlich zu erkennen, wie durch die eisenhaltige Vorbeschichtung die Aufheizraten angeglichen werden, insbesondere durch die sehr starke Erhöhung der Aufheizrate im dicken Probenteil. Dies führt zu einer deutlichen Vergrößerung des Prozessfensters bei der Erwärmung im Zuge der Pressformhärtung.

In der Tabelle 1 sind die resultierenden Diffusionsschichtdicken zusammengefasst, die metallografisch an mehreren Schliffen aus den jeweiligen Probenbereichen (dick/dünn) bestimmt und gemittelt wurden. Die auseinandergezogene Darstellung dieser Tabelle 1 erfolgt aus Übersichtlichkeitsgründen. Die Bestimmung der Diffusionsschichtdicke erfolgte in Anlehnung an die VW Werksnorm TL 4225 in der derzeit aktuellen Fassung.

Tabelle 1

| Probe | Variante | Blechdicken [mm] | | gemessene mittlere Diffusionsschichtdicken und maximaler Dickenunterschied $DI_{max}$ [$\mu$m] | | |
|---|---|---|---|---|---|---|
| | | D1 | D2 | Bereich D1 | Bereich D2 | $DI_{max}$ (Bereich D2-D1) |
| V1_1 | V1-REF | 1,5 | 0,75 | 4 | 9 | 5 |
| V1_2 | V1-REF | 1,5 | 0,75 | 4 | 9 | 5 |
| V2_1 | V2-Beschichten+Walzen | 1,5 | 0,75 | 7 | 9 | 2 |
| V2_2 | V2-Beschichten+Walzen | 1,5 | 0,75 | 7 | 10 | 3 |
| V3_1 | V3-Walzen+Beschichten | 1,5 | 0,75 | 7 | 10 | 3 |
| V3_2 | V3-Walzen+Beschichten | 1,5 | 0,75 | 8 | 11 | 3 |

(fortgesetzt)

| Probe | Variante | Blechdicken [mm] | | gemessene mittlere Diffusionsschichtdicken und maximaler Dickenunterschied $DI_{max}$ [$\mu m$] | | |
|---|---|---|---|---|---|---|
| | | D1 | D2 | Bereich D1 | Bereich D2 | $DI_{max}$ (Bereich D2-D1) |
| V4_1 | V4-Walzen+partielles Beschichten | 1,5 | 0,75 | 8 | 8 | 0 |
| V4_2 | V4-Walzen+partielles Beschichten | 1,5 | 0,75 | 7 | 9 | 2 |
| | Erfindungsgemäß: DImax ≤ | | | | | |
| Probe | 8*((D1-D2)/D1) | 6*((D1-D2)/D1) | | 4*((D1-D2)ID1) | | |
| V1_1 | NEIN | NEIN | | NEIN | | |
| V1_2 | NEIN | NEIN | | NEIN | | |
| V2_1 | JA | JA | | JA | | |
| V2_2 | JA | JA | | NEIN | | |
| V3_1 | JA | JA | | NEIN | | |
| V3_2 | JA | JA | | NEIN | | |
| V4_1 | JA | JA | | JA | | |
| V4_2 | JA | JA | | JA | | |

Diese Ergebnisse wurden mit ergänzenden Untersuchungen kombiniert, in denen der Einfluss der eisenhaltigen Beschichtung auf die Aufheizrate und Diffusionsschichtdicke bei verschiedenen Blechdicken, Erwärmzeiten und Erwärmtemperaturen untersucht wurde. Auch konnte hier eine annähernd lineare Dickenzunahme der Diffusionsschicht mit der Erwärmzeit beobachtet werden. Als Resultat aus diesen Untersuchungen wurden die vorab vorgestellten formelmäßigen Zusammenhänge zwischen dem maximalen Dickenunterschied der Diffusionsschichtdicke und dem Blechdickenunterschied der Ausgangsplatine empirisch ermittelt.

Eine Annäherung der Aufheizraten führt wie vorab beschrieben zu einem geringen Unterschied bei den Diffusionsschichtdicken und resultiert in homogenen Bauteileigenschaften im Hinblick auf die Lackierfähigkeit und die Punktschweißeignung. Besonders vorteilhaft ist ein Legierungsrad bezogen auf das gesamte Bauteil mit einer Diffusionsschichtdicke zwischen 2 und 14 $\mu m$, besonders vorteilhaft zwischen 4 und 12 $\mu m$.

Bei der Herstellung von Bauteilen durch Presshärten bleibt die eisenhaltige Vorbeschichtung auf der Platine nicht bestehen. Vielmehr bildet sich im Zuge der Erwärmung, z. B. in einem Rollenherdofen, durch die erfindungsgemäße Vorbeschichtung der Ausgangsplatine mit der anorganischen eisenhaltigen Konversionsschicht eine aluminiumreiche Oxidschicht aus, die mit Eisenkationen dotiert ist. Die Eisenkationen unterdrücken die sonst übliche Selbstbegrenzung des Aluminiumoxidschichtwachstums und führen zur Ausbildung wesentlich dickerer Aluminiumoxidschichten während der Wärmebehandlung, wobei Aluminiumoxidschichtdicken von über 50 nm erreicht werden.

Übliche Aluminiumoxidschichtdicken an pressgehärteten Bauteilen mit aluminiumbasierten Überzug ohne eisenhaltige Vorbeschichtung sind hingegen wie zu Figur 1 beschrieben, deutlich geringer. Somit weisen erfindungsgemäße Bauteile zumindest im Bereich mit der hohen Blechdicke der Ausgangsplatine eine verdickte Aluminiumoxidschicht von mehr als 50 nm auf, die aus der eisenhaltigen Vorbeschichtung in Kombination mit der Erwärmung vor dem Presshärten resultiert.

Ein beispielhafter vorteilhafter Verfahrensablauf wird im Folgenden beschrieben:

- Warmwalzen, Beizen und optionales Kaltwalzen eines geeigneten Stahlbandes
- Glühen des Stahlbandes in einer Schmelztauchbeschichtungsanlage in einer reduzierenden Atmosphäre bei Temperaturen zwischen 500 und 950 °C und nachfolgendes Schmelztauchen in einer aluminiumbasierten Schmelze und Aufbringung eines aluminiumbasierten Überzugs auf dem Stahlband mit einem Auflagengewicht zwischen 60

und 200 g/m$^2$ beidseitig

- Nachfolgendes Aufbringen einer anorganischen eisenhaltigen Konversionsschicht auf dem aluminiumbasierten Überzug mit einem Schichtgewicht bezogen auf Eisen von 3-30 mg/m$^2$
- flexibles Walzen des Stahlbandes mit dem aluminiumbasierten Überzug, so dass der dünne Bereich des resultierenden Bandes 70 % der Dicke des dicken Bereichs des Bandes aufweist oder weniger
- Herstellung von Platinen aus dem flexibel gewalzten Band, so dass dicke und dünne Blechabschnitte innerhalb jeder zugeschnittenen Platine liegen
- Herstellung von Bauteilen durch Erwärmen der Platinen in einem Rollenherdofen auf Temperaturen zwischen 750 und 1000 °C zur Einstellung eines austenitischen Gefüges zumindest in Teilen der Platine und anschließendes Umformen in einem Werkzeug zu einem Bauteil bei gleichzeitiger schneller Abkühlung, so dass zumindest in Teilen des Bauteils ein martensitisches Härtegefüge entsteht.

**Patentansprüche**

1. Verfahren zur Herstellung eines pressformgehärteten Bauteils mit folgenden Schritten:

   - Bereitstellen eines Stahlbandes mit einem aluminiumbasierten Überzug
   - Aufbringen einer anorganischen eisenhaltigen Konversionsschicht auf den aluminiumbasierten Überzug mit einem Schichtgewicht bezogen auf Eisen von 3-30 mg/m$^2$
   - Kaltwalzen des Stahlbandes zu einem flexibel gewalzten Band mit Bandabschnitten unterschiedlicher Blechdicke
   - Zuschneiden einer Ausgangsplatine aus dem flexibel gewalzten Band, wobei die Ausgangsplatine unterschiedliche Blechdicken mit einem dünnsten und einem dicksten Blechabschnitt aufweist
   - Pressformhärten der Ausgangsplatine zu einem Bauteil.

2. Verfahren zur Herstellung eines pressformgehärteten Bauteils mit folgenden Schritten:

   - Bereitstellen eines Stahlbandes mit einem aluminiumbasierten Überzug
   - Kaltwalzen des Stahlbandes zu einem flexibel gewalzten Band mit Bandabschnitten unterschiedlicher Blechdicke
   - Zuschneiden einer Ausgangsplatine aus dem flexibel gewalzten Band, wobei die Ausgangsplatine unterschiedliche Blechdicken mit einem dünnsten und einem dicksten Blechabschnitt aufweist
   - Vor oder nach dem Zuschneiden der Ausgangsplatine, lokales oder vollflächiges Aufbringen einer anorganischen eisenhaltigen Konversionsschicht auf den aluminiumbasierten Überzug mit einem Schichtgewicht bezogen auf Eisen von 3-30 mg/m$^2$ zumindest im Bereich des dicksten Blechabschnitts
   - Pressformhärten der Ausgangsplatine zu einem Bauteil.

3. Verfahren zur Herstellung eines pressformgehärteten Bauteils mit folgenden Schritten:

   - Bereitstellen von mindestens zwei Stahlbandabschnitten mit einem aluminiumbasierten Überzug, die unterschiedliche Blechdicken aufweisen,
   - Zusammenschweißen der Stahlbandabschnitte zu einer Ausgangsplatine, wobei die Ausgangsplatine unterschiedliche Blechdicken mit einem dünnsten und einem dicksten Blechabschnitt aufweist
   - Vor oder nach dem Zusammenschweißen lokales oder vollflächiges Aufbringen einer anorganischen eisenhaltigen Konversionsschicht auf den aluminiumbasierten Überzug mit einem Schichtgewicht bezogen auf Eisen von 3-30 mg/m$^2$ zumindest im Bereich des dicksten Blechabschnitts
   - Pressformhärten der Ausgangsplatine zu einem Bauteil.

4. Verfahren nach einem der Ansprüche 1 bis 3, **dadurch gekennzeichnet, dass** die anorganische eisenhaltige Konversionsschicht auf dem aluminiumbasierten Überzug ein Schichtgewicht bezogen auf Eisen von 5-25 mg/m$^2$, vorteilhaft 7-20 mg/m$^2$ aufweist.

5. Verfahren nach einem der Ansprüche 1 bis 4, **dadurch gekennzeichnet, dass** die Ausbildung der anorganischen eisenhaltigen Konversionsschicht auf dem aluminiumbasierten Überzug durch Aufbringen einer Lösung von Eisenverbindungen in einer außenstromlosen Reaktion mit dem aluminiumbasierten metallischen Überzug erfolgt.

6. Verfahren nach einem der Ansprüche 1 bis 5, **dadurch gekennzeichnet, dass** der dünnste Blechabschnitt der Ausgangsplatine höchstens 80 %, vorzugsweise 70 % oder weniger, der Dicke des dicksten Blechabschnitts der Ausgangsplatine aufweist.

7. Ausgangsplatine zur Herstellung eines pressformgehärteten Stahlbauteils mit einem aluminiumbasierten Überzug, bei dem die Ausgangsplatine unterschiedliche Blechdicken aufweist, **dadurch gekennzeichnet, dass** eine anorganische eisenhaltige Konversionsschicht auf dem aluminiumbasierten Überzug mit einem Schichtgewicht bezogen auf Eisen von 3-30 mg/m2, vorteilhaft 5-25 mg/m$^2$, besonders vorteilhaft 7-20 mg/m$^2$ ausgebildet ist.

8. Ausgangsplatine nach Anspruch 7, hergestellt aus

    - einem flexibel gewalzten Band aus Stahl oder zusammengeschweißten Bandabschnitten aus Stahl.

9. Ausgangsplatine nach Anspruch 8, **dadurch gekennzeichnet, dass** die jeweils zusammengeschweißten Bandabschnitte unterschiedliche Festigkeiten aufweisen mit einer Differenz in der Zugfestigkeit von mehr als 50 MPa.

10. Ausgangsplatine nach mindestens einem der Ansprüche 7 bis 9, **gekennzeichnet durch** die Verwendung von härtbaren Mangan-Bor-Stählen.

11. Ausgangsplatine nach einem der Ansprüche 7 bis 10, **dadurch gekennzeichnet, dass** die anorganische eisenhaltige Konversionsschicht auf dem aluminiumbasierten Überzug mit einem Schichtgewicht bezogen auf Eisen von 3-30 mg/m2 mindestens im Bereich des dicksten Blechabschnitts auf der Ausgangsplatine aufgebracht ist.

12. Pressgehärtetes Bauteil, hergestellt aus einer Ausgangsplatine nach einem der Ansprüche 7 bis 11 mit einem aluminiumbasierten Überzug, mit unterschiedlichen Blechdicken, aufweisend einen dünnsten und einen dicksten Blechabschnitt, **dadurch gekennzeichnet, dass** eine Diffusionszone zwischen dem Stahlsubstrat und dem aluminiumbasierten Überzug, bestehend aus Metallen des Überzugs und des Stahlsubstrats, ausgebildet ist, wobei die Diffusionszonen in den verschiedenen Blechdickenbereichen bezogen auf die Ausgangsplatine einen maximalen Dickenunterschied aufweisen, der dem folgenden Zusammenhang entspricht:

$$DI_{max} \leq 8*((D1-D2)/D1),$$

mit

    D1: dickster Blechabschnitt der Ausgangsplatine
    D2: dünnster Blechabschnitt der Ausgangsplatine
    $DI_{max}$: Maximaler Dickenunterschied der Diffusionsschichtdicken am gehärteten Bauteil

13. Pressgehärtetes Bauteil nach Anspruch 12, **dadurch gekennzeichnet, dass** der maximale Dickenunterschied der Diffusionsschichtdicken am gehärteten Bauteil $DI_{max} \leq 6*((D1-D2)/D1)$, insbesondere $DI_{max} \leq 4*((D1-D2)/D1)$, beträgt.

14. Pressgehärtetes Bauteil nach Anspruch 12 oder 13, **dadurch gekennzeichnet, dass** die Dicke der Diffusionszone zwischen Stahl und dem aluminiumbasierten Überzug in den verschiedenen Blechdickenbereichen vorteilhaft 2 bis 14 $\mu$m, besonders vorteilhaft 4 bis 12 $\mu$m beträgt.

15. Pressformgehärtetes Bauteil nach mindestens einem der Ansprüche 12 bis 14, **dadurch gekennzeichnet, dass** das Bauteil im Bereich des dicksten Blechabschnitts der Ausgangsplatine eine Aluminiumoxidschicht mit mindestens 50 nm Dicke auf der Bauteiloberfläche aufweist.

**Claims**

1. Method for producing a press-hardened component, comprising the following steps:

    - providing a steel strip having an aluminum-based coating,
    - applying an inorganic iron-containing conversion layer to the aluminum-based coating, which layer has a layer weight based on iron of 3-30 mg/m$^2$,

- cold-rolling the steel strip to form a flexibly rolled strip having strip portions of different sheet thicknesses,
- cutting a starting blank from the flexibly rolled strip, wherein the starting blank has different sheet thicknesses with a thinnest and a thickest sheet
portion,
- press-hardening the starting blank to form a component.

2.  Method for producing a press-hardened component, comprising the following steps:

    - providing a steel strip having an aluminum-based coating,
    - cold-rolling the steel strip to form a flexibly rolled strip having strip portions of different sheet thicknesses,
    - cutting a starting blank from the flexibly rolled strip, wherein the starting blank has different sheet thicknesses with a thinnest and a thickest sheet portion,
    - before or after cutting the starting blank, applying an inorganic iron-containing conversion layer to the aluminum-based coating locally or over the entire surface thereof, which layer has a layer weight based on iron of 3-30 mg/m$^2$ at least in the region of the thickest sheet portion,
    - press-hardening the starting blank to form a component.

3.  Method for producing a press-hardened component, comprising the following steps:

    - providing at least two steel strip portions that have an aluminum-based coating and have different sheet thicknesses,
    - welding the steel strip portions together to form a starting blank, wherein the starting blank has different sheet thicknesses with a thinnest and a thickest sheet portion,
    - before or after welding together, applying an inorganic iron-containing conversion layer to the aluminum-based coating locally or over the entire surface thereof, which layer has a layer weight based on iron of 3-30 mg/m$^2$ at least in the region of the thickest sheet portion,
    - press-hardening the starting blank to form a component.

4.  Method according to any of claims 1 to 3, **characterized in that** the inorganic iron-containing conversion layer on the aluminum-based coating has a layer weight based on iron of 5-25 mg/m$^2$, advantageously 7-20 mg/m$^2$.

5.  Method according to any of claims 1 to 4, **characterized in that** the inorganic iron-containing conversion layer is formed on the aluminum-based coating by applying a solution of iron compounds in an external current-less reaction with the aluminum-based metal coating.

6.  Method according to any of claims 1 to 5, **characterized in that** the thinnest sheet portion of the starting blank has at most 80%, preferably 70% or less, of the thickness of the thickest sheet portion of the starting blank.

7.  A starting blank for producing a press-hardened steel component having an aluminum-based coating, the starting blank having different sheet thicknesses, **characterized in that** an inorganic iron-containing conversion layer is formed on the aluminum-based coating, which layer has a layer weight based on iron of 3-30 mg/m$^2$, advantageously 5-25 mg/m$^2$, particularly advantageously 7-20 mg/m$^2$.

8.  The starting blank according to claim 7, produced from

    - a flexibly rolled strip made of steel, or strip portions made of steel that are welded together.

9.  The starting blank according to claim 8, **characterized in that** the strip portions that are each welded together have different strengths, with a difference in tensile strength of more than 50 MPa.

10. The starting blank according to at least one of claims 7 to 9, **characterized by** the use of hardenable manganese-boron steels.

11. The starting blank according to any of claims 7 to 10, **characterized in that** the inorganic iron-containing conversion layer is applied to the aluminum-based coating with a layer weight based on iron of 3-30 mg/m$^2$ at least in the region of the thickest sheet portion on the starting blank.

12. Press-hardened component, produced from a starting blank according to any of claims 7 to 11 having an aluminum-based coating, having different sheet thicknesses, and having a thinnest and a thickest sheet portion, **characterized in that** a diffusion region is formed between the steel substrate and the aluminum-based coating, consisting of metals of the coating and of the steel substrate, wherein the diffusion regions in the different sheet thickness regions have, relative to the starting blank, a maximum thickness difference which corresponds to the following relationship:

$$DI_{max} \leq 8*((D1-D2)/D1),$$

where

D1: thickest sheet portion of the starting blank
D2: thinnest sheet portion of the starting blank
$DI_{max}$: maximum thickness difference of the diffusion layer thicknesses on the hardened component.

13. Press-hardened component according to claim 12, **characterized in that** the maximum thickness difference of the diffusion layer thicknesses on the hardened component is $DI_{max} \leq 6*((D1-D2)/D1)$, in particular $DI_{max} \leq 4*((D1-D2)/D1)$.

14. Press-hardened component according to claim 12 or 13, **characterized in that** the thickness of the diffusion region between the steel and the aluminum-based coating in the different sheet thickness regions is advantageously 2 to 14 $\mu$m, particularly advantageously 4 to 12 $\mu$m.

15. Press-hardened component according to at least one of claims 12 to 14, **characterized in that** the component has an aluminum oxide layer having at least 50 nm thickness on the component surface in the region of the thickest sheet portion of the starting blank.

**Revendications**

1. Procédé de fabrication d'un composant écroui sous presse, ledit procédé comprenant les étapes suivantes :

   - fournir une bande d'acier pourvue d'un revêtement à base d'aluminium,
   - appliquer une couche de conversion inorganique contenant du fer sur le revêtement à base d'aluminium avec un poids de couche basé sur le fer de 3 à 30 mg/m², 
   - laminer à froid la bande d'acier pour obtenir une bande laminée de manière flexible qui est pourvue de portions de bande de différentes épaisseurs de tôle,
   - découper un flan de départ dans la bande laminée de manière flexible, le flan de départ présentant différentes épaisseurs de tôle avec une portion de tôle plus mince et une portion de tôle plus épaisse,
   - écrouir à la presse le flan de départ pour obtenir un composant.

2. Procédé de fabrication d'un composant écroui sous presse, ledit procédé comprenant les étapes suivantes :

   - fournir une bande d'acier pourvue d'un revêtement à base d'aluminium,
   - laminer à froid la bande d'acier pour obtenir une bande laminée de manière flexible avec des portions de bande de différentes épaisseurs de tôle,
   - découper un flan de départ dans la bande laminée de manière flexible, le flan de départ présentant différentes épaisseurs de tôle avec une portion de tôle plus mince et une portion de tôle plus épaisse,
   - avant ou après la découpe du flan de départ, appliquer localement ou sur toute la surface une couche de conversion inorganique contenant du fer sur le revêtement à base d'aluminium avec un poids de couche basé sur le fer de 3 à 30 mg/m², au moins dans la zone de la portion de tôle plus épaisse,
   - écrouir sous presse le flan de départ pour obtenir un composant.

3. Procédé de fabrication d'un composant écroui sous presse, ledit procédé comprenant les étapes suivantes :

   - fournir au moins deux portions de bande d'acier pourvues d'un revêtement à base d'aluminium et ayant des épaisseurs de tôle différentes,
   - souder ensemble les portions de bande d'acier pour former un flan de départ, le flan de départ ayant différentes épaisseurs de tôle avec une portion de tôle plus mince et une portion de tôle plus épaisse,
- avant ou après le soudage, appliquer localement ou sur toute la surface une couche de conversion inorganique contenant du fer sur le revêtement à base d'aluminium avec un poids de couche basé sur le fer de 3 à 30 mg/m$^2$, au moins dans la zone de la portion de tôle plus épaisse,
- écrouir sous presse le flan de départ pour former un composant.

4.  Procédé selon l'une des revendications 1 à 3, **caractérisé en ce que** la couche de conversion inorganique contenant du fer sur le revêtement à base d'aluminium a un poids de couche basé sur le fer de 5 à 25 mg/m$^2$, avantageusement de 7 à 20 mg/m$^2$.

5.  Procédé selon l'une des revendications 1 à 4, **caractérisé en ce que** la couche de conversion inorganique contenant du fer est formée sur le revêtement à base d'aluminium par application d'une solution de composés de fer en réaction sans électricité extérieure avec le revêtement métallique à base d'aluminium.

6.  Procédé selon l'une des revendications 1 à 5, **caractérisé en ce que** la portion de tôle plus mince du flan de départ présente au maximum 80 %, de préférence 70 % ou moins, de l'épaisseur de la portion de tôle plus épaisse du flan de départ.

7.  Flan de départ destiné à la fabrication d'un composant en acier écroui sous presse pourvu d'un revêtement à base d'aluminium, le flan de départ présentant différentes épaisseurs de tôle, **caractérisé en ce qu'**une couche de conversion inorganique contenant du fer est formée sur le revêtement à base d'aluminium avec un poids de couche basé sur le fer de 3 à 30 mg/m$^2$, avantageusement de 5 à 25 mg/m$^2$, de manière particulièrement avantageuse de 7 à 20 mg/m$^2$.

8.  Flan de départ selon la revendication 7, fabriqué à partir d'une bande d'acier laminée de manière flexible ou de portions de bande d'acier soudées ensemble.

9.  Flan de départ selon la revendication 8, **caractérisé en ce que** les portions de bande soudées ensemble présentent des résistances différentes avec une différence de résistance à la traction supérieure à 50 MPa.

10. Flan de départ selon l'une au moins des revendications 7 à 9, **caractérisé par** l'utilisation d'aciers au manganèse-bore pouvant être écroui.

11. Flan de départ selon l'une des revendications 7 à 10, **caractérisé en ce que** la couche de conversion inorganique contenant du fer est appliquée sur le revêtement à base d'aluminium avec un poids de couche basé sur le fer de 3 à 30 mg/m$^2$ au moins dans la zone de la portion de tôle plus épaisse du flan de départ.

12. Composant écroui sous presse, fabriqué à partir d'un flan de départ selon l'une des revendications 7 à 11 et pourvu d'un revêtement à base d'aluminium, ledit composant ayant des épaisseurs de tôle différentes, comportant une portion de tôle plus mince et une portion de tôle plus épaisse, **caractérisé en ce qu'**une zone de diffusion est formée entre le substrat en acier et le revêtement à base d'aluminium, comprenant des métaux du revêtement et du substrat en acier, les zones de diffusion dans les différentes zones d'épaisseur de tôle présentant par rapport au flan de départ une différence d'épaisseur maximale qui correspond à la relation suivante :

$$DI_{max} \leq 8*((D1-D2)/D1),$$

avec

    D1: portion de tôle plus épaisse du flan de départ
    D2: portion de tôle plus mince du flan de départ
    $DI_{max}$: différence d'épaisseur maximale entre les épaisseurs de couche de diffusion du composant écroui.

13. Composant écroui sous presse selon la revendication 12, **caractérisé en ce que** la différence d'épaisseur maximale entre les épaisseurs de couche de diffusion du composant écroui est $DI_{max} \leq 6*((D1-D2)/D1)$, en particulier $DI_{max} \leq 4*((D1-D2)/D1)$.

14. Composant écroui sous presse selon la revendication 12 ou 13, **caractérisé en ce que** l'épaisseur de la zone de diffusion entre l'acier et le revêtement à base d'aluminium dans les différentes zones d'épaisseurs de tôle est avantageusement de 2 à 14 $\mu$m, de manière particulièrement avantageuse de 4 à 12 $\mu$m.

15. Composant écroui sous presse selon l'une au moins des revendications 12 à 14, **caractérisé en ce que** le composant comporte une couche d'oxyde d'aluminium d'une épaisseur d'au moins 50 nm sur la surface du composant dans la zone de la portion de tôle plus épaisse du flan de départ.

Aluminiumoxid
(< 0,05 µm)

Zone mit verschiedenen
intermetallischen Phasen

Diffusionszone Fe(Al, Si)

Stahl (Martensit)

Fig. 1

Fig. 2

Fig. 3

Fig. 4

Fig. 5a

Fig. 5b

Fig. 5c

Fig. 5d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2449138 B1
- DE 69933751 T2
- DE 102015122410 A1
- WO 2021063899 A1